# EUROPEAN PATENT SPECIFICATION

(11) **EP 2 595 712 B1**
(45) Date of publication and mention of the grant of the patent: **30.03.2016**
(21) Application number: 11810198.9
(22) Date of filing: 15.07.2011
(51) Int. Cl.: B29C 43/18, A63B 59/70, A63B 102/24

(54) **CO-MOLDED, FOCUSED WEIGHTED, DIMPLE ARRAYED HOCKEY STICKS AND OTHER COMPOSITE STRUCTURES**
COGEFORMTE, FOKUSSIERT GEWICHTETE UND MIT ANGEORDNETEN VERTIEFUNGEN AUSGEBILDETE HOCKEYSCHLÄGER UND ANDERE VERBUNDSTRUKTUREN
CROSSES DE HOCKEY À GROUPEMENTS DE BOSSES À POIDS CENTRÉ CO-MOULÉES ET AUTRES STRUCTURES COMPOSITES

(30) Priority: 23.07.2010 US 367332 P
(43) Date of publication of application: 29.05.2013
(73) Proprietor: Easton Hockey, Inc., Van Nuys, CA 91406 (US)
(72) Inventor: ALLEN, Patrick, La Salle Québec H8R2N3 (CA); GOLDSMITH, Edward, Encino California 91316 (US); IE, Citra, San Diego California 92129 (US); SNOW, Michael, Chula Vista California 91913 (US); MOUNTAIN, Michael, Northridge, California 91343 (US)
(74) Representative: Viering, Jentschura & Partner mbB Patent- und Rechtsanwälte
(86) International application number: PCT/US2011/044194
(87) International publication number: WO 2012/012287

(56) References cited:
- WO-A2-2005/069908
- US-A1- 2004 067 139
- US-A1- 2004 248 676
- US-A1- 2005 070 382
- US-A1- 2007 072 709
- US-A1- 2010 035 708
- US-B1- 7 267 619
- US-B2- 7 044 870
- US-B2- 7 097 577

## Description

### FIELD OF THE INVENTION

The field of the present invention generally relates to composite structures including sporting implements such as hockey sticks and component structures thereof.

### BACKGROUND OF THE INVENTION

Composite structures are generally comprised of fibers (aligned in one or more defined orientations and/or randomly oriented) disposed within a hardened resin matrix. Their manufacture typically involves overlaying one or more plies of fibers in a desired manner relative to one another to create an uncured pre-form construct. The pre-form construct is then cured using a mold (e.g., external and/or internal molds) and perhaps a compression or expansion bladder to facilitate the curing and molding process. The curing process hardens the resin, which is either impregnated on the fibers or transferred into the mold. The molding process, sometimes with the assistance of a bladder, defines the external shape of the composite structure. Once cured the hardened external surfaces of the composite structure may be finished using paint and/or by applying decals (typically in the form of a thin sheet or film) to provide the desired branding, look and finish. Notably, such finishing processes are applied to the hardened surface of the composite structure and are not integrated or incorporated into the molding process.

Composite hockey sticks, like traditional wood hockey sticks, are generally comprised of a blade portion and an elongated shaft portion. The shaft, however, unlike traditional wood hockey sticks is tubular and can be either detachable or permanently attached to the blade. Conventional composite hockey stick shafts are typically either constructed via an automated pull-trusion process or a hand wrapping process. In the pull-trusion process a pulltrusion machine wraps fibers soaked in resin over a mandrel that that is then fed into a die and heating element to cure the resin and hardened the shaft. The hardened shaft is cut into the desired segments as its is pulled off the mandrel. The hand wrapping process involves, wrapping/overlaying a mandrel of suitable dimension with plies of fibers and a resin in the desired locations to create an uncured shaft pre-form that is then cured. Typically, the curing process involves placing the mandrel and uncured shaft pre-form within a tubular compression bladder that is further inserted within a heating compartment. The heat and compression exerted by the bladder on the composite pre-form serves to mold and cure the shaft, which upon cooling results in the fibers being compressed into the shape of the mandrel and disposed in a hardened resin matrix. The mandrel is then removed by sliding it out of one end of the cured tubular shaft. The hardened tubular composite shaft may be further processed (sanded, painted, decaled, etc.) and then either sold separately or mated to a detachable or permanently attached blade and sold as a complete hockey stick unit. Notably, the finishing process including the decaling and paint are applied to the hardened surface of the cured composite structure and are not incorporated into the molding process. A wood or plastic end cap of fixed weight and configuration is sometimes used to cap the top end of the tubular shaft.

Similarly, contemporary composite hockey stick blades are typically constructed by wrapping multiple plies of fibers over one or more core elements to create a hockey stick blade pre-form. The blade pre-form is then placed within an external mold where the resin, which is either pre-impregnated on the fiber plies or added via a resin transfer process, is cured. An expansion bladder internal within the blade pre-form or one or more heat expanding core elements provides internal pressure to mold the blade into the shape of the external mold. The curing process hardens the resin so that the fibers become disposed within a hardened resin matrix while the mold defines the exterior shape of the cured blade. Once molded and cured the blade may be further finished by deburring and perhaps with a coat of paint or exterior decals or the like and is then sold separately or as a hockey stick unit as previously described. Notably, the finishing process including the decaling and paint are applied to the hardened surface of the cured composite structure and are riot incorporated into the molding process. Moreover, the front and back surfaces of the blade are typically smooth with uniform texture to mimic the surface of a traditional wood hockey stick.

Typically the hockey stick blade is attached to the shaft via a "tennon" or "hosel" section, which is generally comprised of an upward extension of the blade from the heel and is dimensioned at its upper end to be slidably and snugly received within a generally rectangular lower tubular end of the shaft. The shaft or a connection member may also be mated to the blade via a tongue and groove type arrangement located at the heel. Such hockey stick constructions and joints are disclosed in U.S. Patent Nos. 7,097,577 and 7,144,343.

Once cured, composite shafts and blades are typically not further processed other than in the way of exterior finishing steps like deburring, painting, decaling with thin sheets or films, and assembly. Consequently, the weight distribution of the stick therefore is primarily determined by the fiber ply lay-up, the resin distribution, and in the case of the blade the core elements. Moreover the decaling primarily consisted of applying a sticker of a logo or painting a name or logo on the cured component.

While such composite constructs have found wide acceptance world-wide, until now there has been little or no attention directed to engineering the weight distribution of hockey sticks by positioning focused weights externally in discrete locations of the blade or shaft and/or the use of an adjustable or modularly weighted focused-weighted end-plug or cap on the end of a tubular (composite or otherwise) hockey stick shaft. Furthermore, until now there has been little or no attention directed to co-molding weighted and/or non-weighted elements and/or logos/information into the external surfaces of a composite structure capable of providing a focused weight distribution while also providing an appealing visible technology to the user. In addition, until now there has been little or nor attention directed to adhesively attaching weighted elements and/or weighted logos/branding information to the external surfaces of a composite structure or to do so within a cavity formed on the outer surface of the composite structure. Moreover, until now there has been little or no attention directed to engineering the texture of the composite blade surface to create a non-smooth or non-uniform texture throughout one or both sides of the blade and/or in discrete regions of one or both sides of the blade or to do so using arrays of convex and/or concave dimple arrangements that are capable of increasing the rotational speed of the puck, which in turn is capable of creating a more stable and controllable launch condition.

U.S. Patent Appl. No. 2007/072709 which reflects the preamble of claim 1 discloses a back and edge weighted field hockey stick including a handle, a throat adjoining the handle and a head adjoining the throat opposite to the handle wherein at least one portion of one of the handle, the throat and the head is hollow.

### SUMMARY OF THE INVENTION

The present invention provides a hockey stick blade system having the technical features as described in the independent claim. Preferred embodiments of the present invention are described in the dependent claims.

The present inventive technology relates to composite structures including sporting implements such as hockey sticks, their manufacture, configuration and component structures. Various aspects are set forth below.

One aspect is directed to a composite structure such as hockey stick blades constructed of fibers disposed within a hardened resin matrix encapsulating one or more core elements such as a light foam (e.g., polyurethane foam), wherein the blade further includes one or more high density components (e.g. metal) positioned externally on the blade. The high density components may be positioned on the front or back of the blade at the heel region or other regions of the blade such as the mid section or toe region thereby creating a focused weight distribution on the blade. A polyurethane elastomer or some other suitable polymer or material may encapsulate the high density components, for instance, to serve as a means to secure the high density components relative to one another and/or in the desired location on the blade. Branding, logo, or other information may be incorporated with the high density element and may also be encapsulated within the polymer. The information may be part of the high density element and/or separate therefrom. The encapsulating polymer may be clear or translucent throughout the component or in one or more regions to allow the high density weights and/or the logo/branding/information to be suitably visible to the user to the extent desired. For example, when both high density component(s) and logo/branding/information elements are encapsulated within the polymer to create a weighted domed logo assembly that is comprised of embedded weights in combination with a logo, such a construct is capable of providing both a desired focused weight distribution as well as appealing and visible branding of the technology to the user in a desirable appearance.

Another aspect is directed to composite structure such as a hockey stick blade constructed of fibers disposed within a hardened resin matrix encapsulating one or more core elements such as a light foam (e.g., Corecell A300 of Gurit at 0.06 g/cc density, Alcan Airex C71.55 at 0.06 g/cc (a polyvinyl-chloride rigid foam), balsa wood at 0.065 g/cc, or other engineered light weight foams), wherein the composite structure or blade further includes one or more non-weighted logo/branding components co-molded externally thereto. The non-weighted logo/branding components may be positioned on the front or back of the blade at the heel, center and/or toe regions of the blade. A polyurethane elastomer or some other suitable polymer or material may encapsulate the non-weighted logo components, for instance, to serve as a means to secure the non-weighted logo components in the desired location on the composite structure (e.g., hockey stick blade or other sporting good composite instrument). The encapsulating polymer may be translucent to allow the branding/logo information to be seen by the user.

Another aspect is directed to a co-molding process for making the hockey stick blade having an external focused weight system (and/or a non-weighted logo/branding system) that includes providing an uncured composite pre-form such as hockey stick blade pre-form and positioning an encapsulated high density system (external focused weighted system) in a cavity on the surface of the uncured pre-form at the desired location. The high density components may be encapsulated with a suitable polymer such as polyurethane elastomer to form the encapsulated high density system. The encapsulated high density system may be secured to the underlying composite blade through high temperature curing. The encapsulating polymer or polyurethane elastomer may serve as a vibration dampener as well as to provide additional weight to the external focused weight system. The various configurations, materials and implementations of the high density components constitute yet another aspect of the inventive technology disclosed.

Another aspect is directed to other process by which an external focused weight system (or a non-weighted logo/branding system) may be incorporated into a composite structure. Such processes include creating a cavity that is later filled with an external focused weight system (or a non-weighted logo/branding system) either before or after the composite structure is cured. The specific manner by which the external focused weight system (or a non-weighted logo/branding system) is incorporated into the cavity, is also an aspect of the inventive technology herein.

Another aspect is directed to a weight-adjustable end-plug dimensioned to be insertable into a tubular shaft, such as a hockey stick. The weight-adjustable end-plug includes an end-plug unit and one or more weighted components insertable into the end-plug unit. The end-plug unit may include one or more chambers to receive and secure the one or more weighted components. The end-plug unit may also include multiple fins that extend laterally from opposing surfaces of the end-plug unit. Once the weight-adjustable end-plug unit is inserted into a tubular hockey stick shaft, the multiple fins flex against the side walls of the hockey stick shaft to secure the weight-adjustable end-plug in its position. The weight-adjustable end-plug allows a hockey player to add and remove weights from the end of the hockey stick shaft and thereby adjust the swing weight of the hockey stick.

Yet another aspect is directed to hockey sticks having an external focused weight system (and/or a non-weighted logo/branding system) co-molded or otherwise incorporated into a composite blade, a tubular shafts, and a weight-adjustable end-plug as described above and methods for making such hockey sticks. The stick may be a two part stick with a detachable blade or a blade that is permanently attached. It is contemplated that approximately an equal amount of weight may be added to the shaft (via weight-adjustable end-plug) and to the blade (via external focused weight system). It is also contemplated that existing composite hockey stick shafts and blade constructs may be made lighter (using fewer plies in certain regions of the constructs) and the weight saved in lightening the construct be added back as external focused weight system as described above, such that the total weight of the shaft, blade or hockey stick remains the same or substantially the same as it did before.

Yet another aspect of the inventive technology disclosed is directed to the incorporation of dimple arrays on the surface of a composite structure, such as a composite hockey stick blade. The arrays may be co-molded into the composite structure and may be convex, concave or a combination thereof. The dimples may have the same or different geometries and the arrangement of the array may be uniform or may vary in numerous respects throughout the composite structure or within a region or regions thereof. For example, the dimples may be symmetrically arranged or non-symmetrically arranged. The dimple array may be located longitudinally at the center of the blade or composite structure, at the heel or tip of the blade or composite construct or any combination thereof. The dimple array may be located vertically above, below, and/or overlap the centerline of the blade (i.e., the line that bisects the upper 1/2 portion of the blade from the lower 1/2 portion) or composite construct. The dimple array may be arranged in a circular fashion, a semi-circular fashion, a rectangular or trapezoidal fashion, and/or any other geometry or combinations of geometries. The dimple array on one face of the composite structure may be the same or different than the dimple face on another face. For example in a composite hockey stick blade implementation, the back face of the blade may have fewer or no dimple arrays relative to the front face of the blade or vice versa. Any combination of the foregoing variations is also contemplated.

Additional implementations, features, variations and advantageous of the invention will be set forth in the description that follows, and will be further evident from the illustrations set forth in the accompanying drawings.

### BRIEF DESCRIPTION OF THE DRAWINGS

The accompanying drawings illustrate presently contemplated implementations of the inventive technology and, together with the description, serve to explain various principles of the technology disclosed herein.
FIG. 1 illustrates a hockey stick that embodies certain aspects of the inventive technology disclosed herein. Specifically, FIG. 1 illustrates an assembled and a disassembled representative hockey stick having a hollow tubular shaft, a replaceable or detachable composite blade that includes a co-molded external focused weight system, and a removable, weight-adjustable end-plug system.
FIG. 2 illustrates a cross-sectional view of the tubular hockey stick shaft such as that depicted in FIG. 1.
FIG. 3a is a front view illustration of the external focused weight system illustrated in FIG. 1 depicting in greater detail the arrangement and the shapes of the individual weights and encapsulating material of an illustrative embodiment.
FIG. 3b is a side profile view of the illustrative external focused weight system depicted in FIG. 3a.
FIG. 4 illustrates another illustrative implementation of an external focused weight system positioned on the backside of a detachable hockey stick blade at the heel region depicting an alternative arrangement and shapes of weighted elements and encapsulating material.
FIG. 4a is a simple diagram that illustrates a cross-sectional view of the hockey stick blade taken along lines 4a----4a of FIG. 4.
FIGs. 5a-5d illustrate steps of a representative process for casting an external focused weight system, such as that shown in FIG. 3 and Fig. 4 wherein the weighted elements are positioned within a mold configured to define the exterior shape and dimensions of the focused weight system and then covered with a polymer such as a polyurethane that upon solidifying encapsulates the weighted elements and logo or branding information therein included. This process may also be used to cast non-weighted encapsulated logo or branding elements (with or without weighted components).
FIGs. 6a-6i illustrate steps of a representative process for co-molding an external focused weight system onto an underlying composite structure in the form of exemplary hockey stick blade such as that depicted in FIGs. 1 and 4, wherein the uncured composite pre-form construct is positioned within a mold and embossed using a suitably designed and configured jig, then the external focused weighted system is positioned within the cavity created by the embossing and the entire assembly is cured within the mold so that the pre-form construct and focused weight system are co-molded.
FIGs. 7a and 7b illustrate a front and side view of an exemplary non-weighted logo or branding component that is capable of being co-molded into a composite construct such as that illustrated in FIG. 9 and as described in the representative co-molding process illustrated in FIGs: 6a-6i.
FIG. 8 is a more detailed illustration of a modular weight-adjustable end-plug system illustrated in the hockey stick depicted in FIG. 1 and includes both an exploded and assembled views of an exemplary implementation of the weight-adjustable end-plug system.
FIG. 9 provides a top profile view of an exemplary logo component that may be encapsulated in the end-cap part of the weight-adjustable end-plug system or that may be co-molded (with or without being first encapsulated within a polymer) into a composite construct as described in the representative co-molding process illustrated in FIGs: 6a-6i..
FIGs. 10a and 10b provide cross-sectional views of the end-plug system depicted in FIG. 8 and 11 without and with weights inserted therein.
FIG. 11 illustrates an exemplary weight-adjustable end-plug system inserted into the top end of a tubular hockey stick shaft such as that depicted in FIGs. 1 and 2 with the internal corners of the shaft depicted in shadow.
FIGs.12a-12f illustrate exemplary concave and/or convex features arranged on a hockey stick blade.
FIG. 13a illustrates the side profile view of the hockey stick blade in FIG. 12a, taken along lines 13a----13a, that includes exemplary concave features that are filled with a filler material. FIGs. 13b and 13c illustrate side profile views of exemplary hockey stick blades having concave/convex features that are formed from corresponding molds having debossing/embossing features.
FIG. 14a illustrates the moment of impact between a hockey puck and a hockey blade having exemplary convex dimpled features on its front surface. FIG. 14b illustrates an exemplary view of the contact surface area of when the hockey puck strikes the hockey stick blade having convex features

### DETAILED DESCRIPTION OF PREFERRED EMBODIMENTS

Preferred embodiments of the various inventive technology disclosed herein will now be described with reference to the drawings. To facilitate description, any reference numeral designating an element in one figure will designate the same element if used in any other figure. The following description of preferred embodiments is only exemplary. Furthermore, in describing preferred embodiments, specific terminology is resorted to for the sake of clarity. However, the invention is not intended to be limited to the specific terms so selected, and it is to be understood that each specific term includes all equivalents. Moreover, while various aspects of the inventive technology are disclosed and described without specific reference to other aspects elsewhere disclosed or described, it should be understood that all of the various aspects and implementations can be combined in any way. Hence it should be understood that the externally positioned focused weight can be combined with an external non-weighted component such as a logo or branding component and may be further combined with the surface texture disclosures relating to dimple arrays, which may be further combined with the modular weighted end-cap and that such combinations of these aspects including the variations described herein can be combined all together or in combination with a single or any multiple aspects.

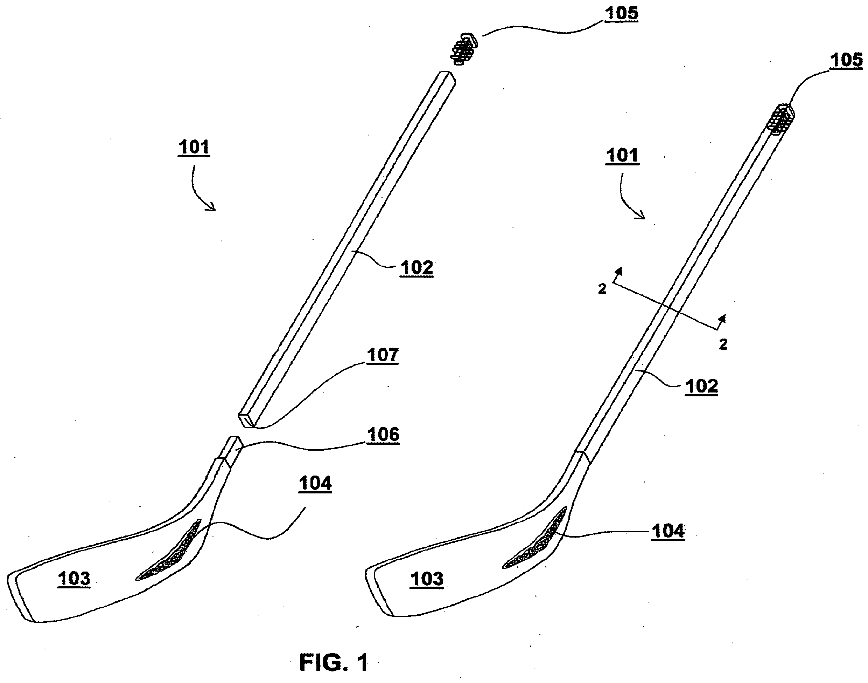

FIG. 1 illustrates both an assembled view and a disassembled view of a representative composite hockey stick 101 comprising a shaft 102, a blade 103 with external focused weight system 104, and a removable, weight-adjustable end-plug system 105. The shaft 102 may be detachable from the blade 103 at its lower end as illustrated in FIG. 1 or may be permanently attached. The joint between the shaft 102 and blade 103 may be comprised of a suitably dimensioned connection member 106 located on the upper-end of the blade 103 (often referred to as a "hosel" or "tennon") that is received within a socket 107 of the lower end shaft 102 as shown in FIG. 1. It should be understood that any number of other connection types, including for example those disclosed in commonly owned patents 7,097,577 and 7,144,343 may be employed.

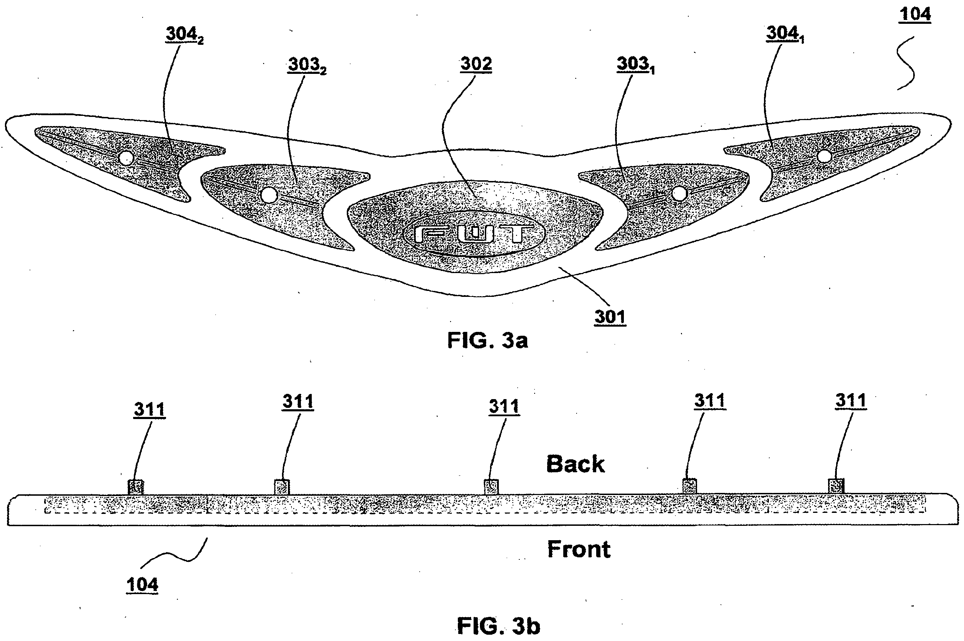

The blade 103 can be made via a process that generally involves the following steps. First, one or more core elements (such as foam) are wrapped with plies of fibers disposed in an unhardened resin in a desired lay-up. As illustrated in FIGs. 16A-16C of co-owned U.S. patent no. 7,097,577 and the corresponding description and blade configurations illustrated 14A-A4F, the core elements are often comprised of an upper and lower element and the plies are often wrapped between the elements to encapsulate the core elements. The core elements may be made of foam such as formulations of expanding syntactic or non-syntact foam such as polyurethane, PVC, epoxy, or any other suitable material. One or more of the core elements either in combination with another type of core element or separately may be made of an elastic material such as rubber or polyurethane rubber. It should be understood that other suitable material capable of bonding with the resin/ fiber while providing suitable durability for the core of the composite sandwich structure may also be used. Together, the one or more core elements are generally in the form of a hockey stick blade 103. An expansion bladder (for example made of plastic is may also be inserted between the wrapped and upper and lower core elements and then the entire blade pre-form construct is further wrapped within additional plies of fibers such that the plastic bladder is encapsulated within plies of fibers. Using epoxy based pre-impregnated plies of fibers, such as 34/700 manufactured by Grafil, Inc. works well in that the adhesive properties of the plies can serve to keep the pre-form structure together as it is being constructed. A suitable plastic bladder material includes a nylon bladder made by Airtech International. It has also been found that a core element made of PVC foam when used with such an expansion bladder is capable of providing suitable results. Once all the plies are layered over the core elements and bladder the entire construct is placed within a female mold having the desired exterior shape of the blade and is cured via application of heat for an appropriate time, temperature and pressure. The plastic bladder is positioned such that the end of the plastic bladder extends out the hosel (e.g., at the top end surface of the hosel) of the blade pre-form and prior to curing is connected to a nozzle that channels pressurized air into the bladder while the blade is being cured. The pressurized air within the bladder serves to provide internal pressure that assists in ensuring that the plies of fibers are tightly compacted and that the blade pre-form takes on an accurate rendition of the mold as it is cured. As explained in is explained in detail below in connection with FIGs. 3-7 below, the external focused weight system 104 or other non-weighted logo/branding/information component can be incorporated into the outer surface of the blade or other composite structure.

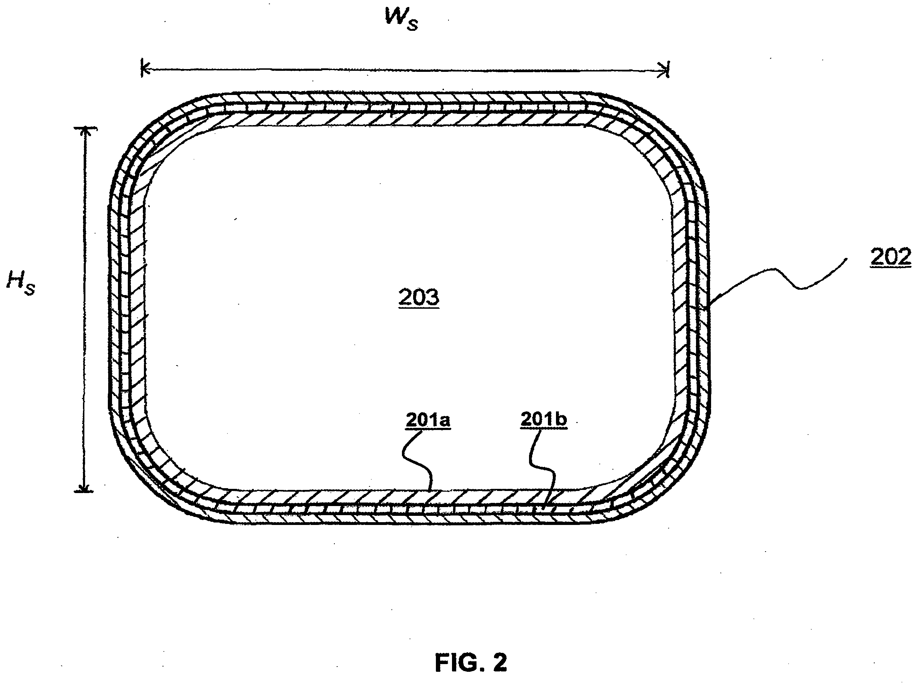

The shaft 102 is tubular and may be constructed of fibers disposed within a hardened resin matrix. The fibers may be aligned and oriented in one or more defined directions in one or more different layers and may include an outer layer a woven fiber. Various fibers may be employed including carbon, aramid (e.g., Kevlar™), boron, glass, etc. FIG. 2 provides a cross-sectional view of the shaft 102 depicted in FIG. 1 and is illustrative of the construction of the shaft 102 including representative layers of fibers 201 a and 201b aligned in one or more defined orientations, a woven outer layer 202, and the tubular hollow 203 of the shaft 102. The lay-up and the dimensions of the hollow 203 may vary as it extends the length of the shaft 102. For example, additional or few plies of fibers may be added or removed from a given region or oriented in a manner to provide the adequate strength and flexibility. Similarly, the hollow and external dimensions of the shaft may vary for example narrow in one or more directions as it extends toward the blade end of the shaft 102.

Typically, as described in the background of this application, composite shafts may be formed either (1) via wrapping plies over a mandrel and then curing (2) via bladder molded process or (3) via a pull-trusion process. The pull-trusion method is typically automated as compared to the wrapping method, which is typically done by hand. In addition, the pull-trusion method typically employs a uniformly dimensioned mandrel which results in a uniform shaft that does not vary in dimension along its longitudinal length. The wrapped construction method allows for variations along the shaft both in construction (e.g., ply lay-up at any given region of the shaft may be varied as needed) and internal and external dimension (e.g., a shaft typically has a tapered internal and external configuration as it extends toward the blade). Thus in a wrapped construction where the mandrel is tapered as it extends downward to the connection with the blade, the mandrel is typically removed from the upper-end (butt) of the shaft because the blade-end (tip) of the shaft is too narrow to allow the larger dimensioned upper regions of the mandrel to pass. While composite tubular shafts have been described, it is also contemplated that the shaft 102 may be constructed of non-fiber reinforced plastic or other material suitable of forming a tubular shaft construct capable of receiving an end-plug and/or blade connection such as aluminum or other suitable metal or may be constructed of a combination of metal and fiber composite.

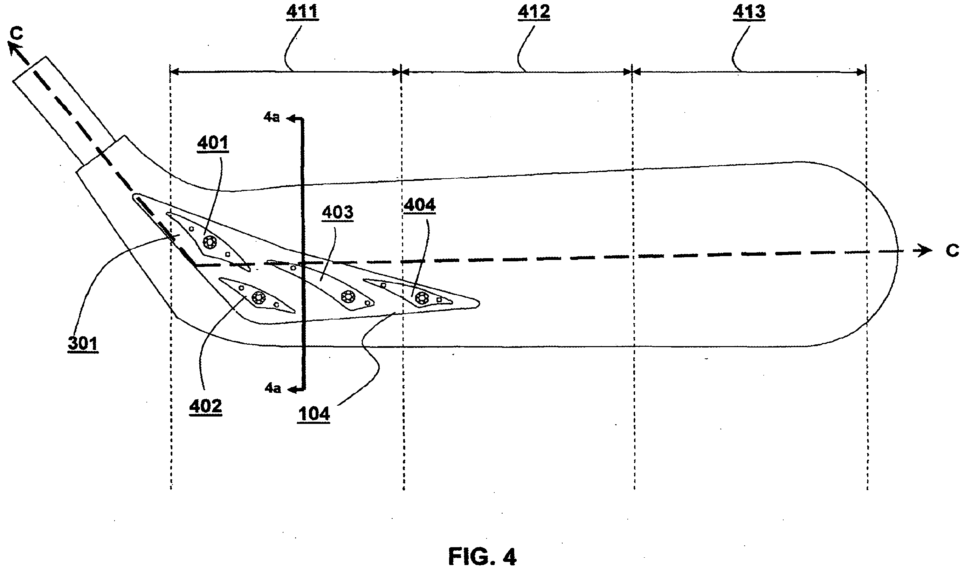

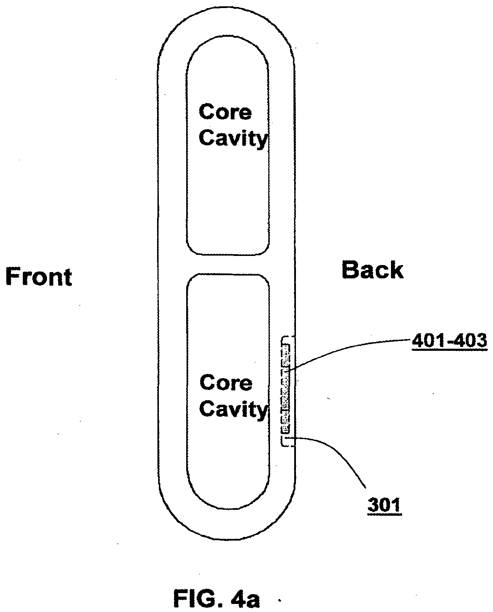

As a general proposition, a hockey puck gains its velocity and direction as a result of impact mechanism with the blade as it is maneuvered by a hockey player. The impact mechanism which involves transfer of energy from the hockey stick to the puck determines the puck's velocity and trajectory. The impact force on the puck, which is generally a product of the mass and velocity of the striking instrument (i.e., hockey stick) at the point of impact is an important component in the energy transfer to the puck. The addition of an external focused weight system 104 on the blade at one or more strategic location(s) is capable of customizing or enhancing the effective mass of the blade at one or more given regions and thereby tailor the characteristic of the puck launching condition. For example, as illustrated in FIGs. 1 and 4, focused weight may be added to, near, or across the heel region of the blade. The heel region of the blade is generally configured or constructed to be stiffer than the toe region in that the toe is typically thinner than the heel area. The heel region also resides between the majority of the blade face and the shaft where the players' hands are in contact. Thus, forces on the blade generally pass through the heel before they reach the players hands and conversely forces exerted by the player on the shaft generally are transferred to the blade through the heel. The heel region is also generally encompassed within or near the region in which high impact shots are taken. Thus, positioning an external focus weight system 104 at, near or across the heel region situates the system to facilitate curtailing/dampening unwanted vibration while also proximal to the regions where high impact shots are taken thereby capable of enhancing the effective force impact on the puck.

FIG. 3a illustrates a front view of the external focused weight system 104 illustrated in FIG. 1 (the front view is the view of the external focused weight system 104 as seen from the back side of the blade 103 in FIG. 1) depicting in greater detail the arrangement and the shapes of the individual weight components and the encapsulating material. As shown, the external focused weight system 104 may comprise a center weighted component 302, intermediate weighted components 303₁₋₂, and peripheral weighted components 304₁₋₂ which are encapsulated, partially or entirely, in an encapsulant material 301, such as a polyurethane elastomer. It is contemplated that one or more of the weighted components 302-304 may embody or depict a logo or that a logo be inserted within the encapsulate material independently of the weighted components. It is contemplated that the encapsulant material 301 may be visually clear or semi-clear so as to be capable of providing an aesthetic pleasing three-dimensional view of the weighted components 302-304 and/or logo, branding, or other marketing information suspended in the encapsulant. Weighted components 302-304 may be fashioned from any material that has a density substantially greater than the density of the blade 103 and/or the encapsulant material 301. For example, a density that is at least 5 or 10 times greater than the density of a core element, resin, or the fibers or the aggregate density of the blade or other composite structure (minus the weighted components) is considered a material that has a substantially greater density. Most metals range from 4:54 g/cm³ (e.g., Titanium) to 21.37 g/cm³ (e.g., Platinum), with copper, iron, chromium, steel, aluminum bronze, nickel, and some tins ranging from approximately 7 to 9 g/cm³ and lead at approximately 11.35 g/cm³. The table below provides some approximate density ranges for representative resin, fiber, and core materials used to manufacture composite structures:

| Material | Density [g/cm³] |
|---|---|
| Exemplary Resins | |
| The matrix or resin based material is selected from a group of resin based materials, including thermoplastics such as polyetherether-ketone, polyphenylene sulfide, polyethylene, polypropylene, urethanes (thermoplastic), and Nylon-6 and thermosets such as urethanes (thermosetting), epoxy, vinylester, polycyanate, and polyester. | Approx. Density Range - 0.75 - 1.52 g/cc |

| Exemplary Fibers | |
|---|---|
| The fibers may be Carbon, Aramid (e.g., Kevlar™), Glass, Polyethylene (e.g., Spectra™), Ceramic (e.g., Nextel™), Boron, Quartz, Polyester | Approx. Density Range - 0.67 - 2.54 g/cc |

| Exemplary Core Elements | |
|---|---|
| formulations of expanding syntactic or non-syntactic foam such as polyurethane, PVC, or epoxy, | Approx. Density Range - 0.06 - 0.21 g/cc |
| elastomers or rubber, | Approx. Density Range - 1.1 g/cc |

A foam core (e.g., ~0.092g/cm³) composite fiber resin (~1.5 g/cm³ fiber and resin) blade 103 typically weighs around 115 grams +/- 10 grams and has a volume of approximately 165 cm³ +/-5 cm³) and hence an aggregate density of approximately 0.7 g/cm³ +/- 0.02 g/cm³). In such a case, the weighted components 302-304 may be fashioned from metals such as zinc - (~7.13 g/cm³), iron (~7.27 to 7.87 g/cm³), copper (~8.96 g/cm³), nickel (~8.9 g/cm³), steel (~7.8 to 8.0 g/cm³), tin (~5.75 to 7.3 g/cm³), or lead (~11.36 g/cm³) or metal alloys thereof, all of which have greater densities, typically on the order of a magnitude or more than 0.7 g/cm³. Weighted components formed, entirely or partially, from zinc metal have been found desirable given the relatively low cost per unit mass and the relative high density of zinc. While only a handful of suitable materials for forming weighted components 302-304 are listed above, other high density materials, not limited to metals, are contemplated.

While the addition of an external focused weight system 104 may be added to a blade or other composite structure to focus the weight distribution to the region in which it is positioned, it is contemplated that an existing blade or other composite construction may be modified to lighten the weight of the blade 103 or other composite structure so that when the external focused weight system 104 is added, the overall weight of the blade 103 (or other composite structure) remains substantially or approximately the same. For instance, the additional weight added by the focused weight system 104 may be offset by corresponding reductions in the weight of the composite blade 103 via for example removal of plies in certain regions of the blade, varying the orientation of the fibers, and/or the selection fibers, core elements, and/or resin. An external focused weight system 104 having a total weight in the range of 5g to 25g, 5 to 20 grams, 5 to 15 grams, 10 to 20 grams, and 10 to 15 grams are contemplated to be added to a blade. An external focused weight system 104 having a total weight of approximately 15g +/- 1g (e.g., weights of 302-304 plus weight of encapsulant material 301) has been found capable of providing a desirable focused weight distribution for blade 103 having a total weight of 115 grams +/- 1 to 15 grams (including the external weight) has been found suitable.

As FIG. 3a illustrates, weighted components 302-304 may be arranged in a symmetrical manner, placing the center of gravity of the external focused weight system 104 in the region of the center weighted component 302. In one embodiment, the weight values ***Wₐ**, **W_{b},*** and ***W_{c},*** of a center weighted component 302, an intermediate weighted component 303₁(or 303₂), and a peripheral weighted component 304₁(or 304₂), respectively, are relatively characterized by ***Wₐ*** > ***W_{b},*** > ***W_{c}*.** Although this relative weight configuration works well to provide a desirable focused weight distribution for blade 103, other relative weight configurations are contemplated. FIG. 4 illustrates another contemplated embodiment of an external focused weight system 104 that may provide a desirable focused weight distribution for blade 103. The depicted external focused weight system 104 is located in the heel region 411 of blade 103 and comprises weights 402, 403,404, and 405 encapsulated in an encapsulant material 301. In this embodiment, the weights 402-405 are not arranged in a symmetrical manner and each weight may have a different weight value. Thus, it is contemplated that the weighted components may be symmetrically or non-symmetrically positioned within the encapsulate material, they may be evenly spaced apart or their spacing may be staggered, uneven, or random, or any combination thereof, they be longitudinally spaced apart or vertically spaced apart or may be spaced apart in depth relative to one another or any combination of spaced arrangement. Moreover, the weighted components may have any suitable or desired shape including circular, rectangular, oval, semi-oval, trapezoidal, triangular, or any combination or group thereof and may taper in thickness toward their outer perimeter or increase in thickness toward their outer perimeter or a combination of increased and decreased thickness extending toward the outer perimeter. In addition, when multiple discrete weight components or elements are employed, the weight distribution of the external focused weight system 104 may be uniform, decrease as it extends radially outward or increase as it extends radially outward or have be a combination of such weight distribution. For example, it is contemplated that an external focused weight system 104 have a relatively high weight distribution near its center region, have a relative high weight distribution near its perimeter region, or have a relatively high weight distribution at both its center and perimeter regions but less so in intermediate regions.

Notably, the space between the weighted components 302-304 is capable of facilitating independent dynamics between the components and yet is also capable of providing for distribution of the focused weight across some or all of the intended impact zone. Notably, while the representative embodiment of the external focused weight system 104 depicted in FIG. 3a - 3b and FIG. 4 - 4a is constructed of multiple weighted components longitudinally spaced apart from one another in an overlapping or staggered manner, it should be understood that there are numerous other contemplated implementations. For example it is contemplated, that fewer or greater numbers of weighted components can be used and indeed its contemplated that there be a single encapsulated weighted component that may be configured as a solid continuous component or may have one or more apertures, open-ended slots, or curvatures there-within filled or unfilled with the encapsulant material. Yet another contemplated implementation of the focused weight system 104 includes an encapsulated material that encapsulates one or more metal or other high density particles, ball-bearings, or flakes or combination thereof and having one or more dimensions either separately or in combination with one or more larger weighted component elements. In the case where focused weight system 104 is comprised of encapsulated metal or high density particles, logo or branding information elements perhaps in the form of a 2 or 3 dimensional sheet or film (e.g. made of coated or embossed plastic pr polymer, metallic coated composites), may be inserted within the system 104 to mimic the shape of one or more larger weighted components or otherwise represent the weighted technology component, manufacturer or other branding or marketing information.

By example FIG. 4a illustrates another implementation of an external focused weight system 104. Notably, as illustrated therein, the focused weight system 104 and weight components are located generally across the center line of the blade 103 and generally at the heel region 411 of the blade 103. It is contemplated that some or all of the external focused weight system 104 may be positioned below the centerline and/or above the centerline and that some of the components encompass areas longitudinally anterior and/or posterior to the heel region of the blade. Hence, it is contemplated that the external focused weight system 104 may be positioned entirely or partially in regions other than the heel 411, such as the mid-section 412 or the toe section 413 of the blade 103. Further it should be understood that while a single external focused weight system 104 is illustrated, it is contemplated that multiple external focused weight systems 104 may be employed in different locations along the length and/or height of the blade 103 and that such external focused weight systems may be varied in weight and/or configuration. For example, it is contemplated that one focused weight system 104 may be positioned low in the blade (near the ice) while another in the same blade may be positioned above the first system and that the lower system be heavier than the higher component or vice-a-versa. It is also contemplated that multiple focused weight systems 104 and/or weight elements (302-304; 401-404) be positioned along the length of the blade 103 either immediately adjacent to each other or longitudinally spaced a defined distance and may have a staggered or overlapping positioning. It is also contemplated that multiple focused weight systems 104 and/or weight elements (302-304; 401-404) may be positioned along the perimeter of one or more desired regions (e.g., specified impact region) to provide for perimeter weighting of the region or regions.

The representative implementations of the focused weight system 104 illustrated in FIGs. 3 and 4 are each comprised of discrete weighted components that are arranged sufficiently apart from each other in the encapsulant material 301 to be capable of allowing the encapsulant material 301 to flex and deform for example along with the flex in the length of the blade 103 when an external force or stress is encountered. As previously noted, the number and the size of the discrete weighted components used in the system may vary depending on the density of the material forming the weighted components. For instance, if the discrete weighted components are fashioned from lead (~11.36 g/cm³), a higher density metal, as opposed to zinc (~7.13 g/cm³), fewer or smaller (or a combination of fewer or smaller) discrete weighted components may be used to achieve the same or a substantially similar focused weight distribution. Generally, encapsulating less or smaller discrete weighted components in a given encapsulate is capable of providing the external focused weighted system 104 with greater flexibility. Hence, it is also contemplated that the use of polymer encapsulated weight elements/components in the form of metal particulates/flakes, or small bearing may provide the desired flexibility, while also providing a more uniform weight distribution.

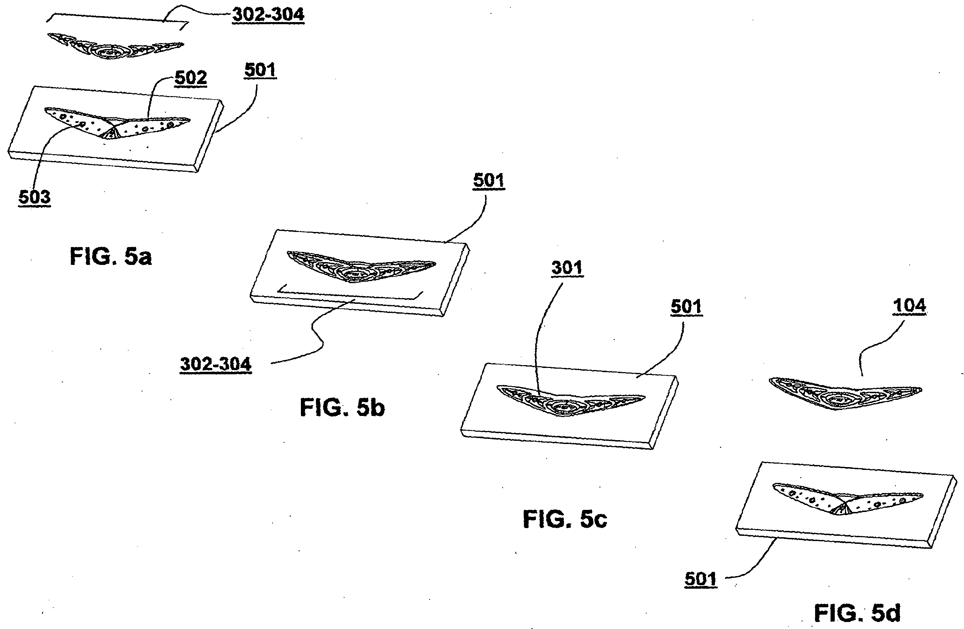

FIGs. 5a-5d illustrate the steps of a contemplated process for casting an external focused weight system 104, such as that shown in FIG. 3. FIGs. 5a and 5b illustrate discrete metal weight components 302-304 being placed inside a mold 501. Specifically, the discrete weight components 302-304 are inserted into a preformed cavity 502 having the shape and dimensions of the intended external focused weight system 104. Located within the preformed cavity 502 may be indentations or holes 503 corresponding to aspects of the external shape of the weight components to facilitate arranging and orienting the discrete weighted components 302-304 in a defined manner and spatial relationship within the mold cavity 502 and hence within the external focused weight system 104. While, the weight components may be fully encapsulated with the encapsulate material 301, as illustrated in the profile view of the external focused weight system 104 depicted in FIG. 3b, the discrete weighted components 302-304 may be only partially encapsulated by encapsulant material 301 and that portions (e.g. 311 in the form of a positioning pegs) of the discrete weighted components 302-304 may beyond the boundaries of the encapsulant material. By aligning with or inserting these protruding portions 311 of the discrete weighted components 302-304 into the indentations or holes 503, the discrete weighted components 302-304 may be set at their intended locations and oriented in a defined manner and spatial relationship within the mold cavity 502 and hence within the external focused weight system 104. FIG. 5c illustrates pouring or otherwise positioning the encapsulant material encapsulant material 301 into the preformed cavity 502 with the weight component/elements 302-304. In a preferred implementation the encapsulant material may be in the form of a liquid clear polymer such as a polyurethane that is poured into the preformed cavity 502 with the one or more weight components/elements and cured to create an integral solidified external weight system 104 comprised of weight components (and/or logo/branding or other marketing information) encapsulated within a hardened/cured polymer encapsulant. Curing clear PU material may be accelerated with for example at ~180°F for ~30 minutes has been found to be a suitable. FIG. 5d illustrates the step of removing the cured external focused weight system 104 (having weighted components 302-304 encapsulated in encapsulant material 301) from the mold 501. The thickness at the perimeter of the cured system may be thinner or thicker than at the center regions, in other words it is contemplated that the thickness may taper down and/or thicken toward the perimeter or edges of the system 104. It should be understood that while the foregoing process may be employed using only a logo/branding or other marketing information instead of or in combination with one or more weight components/elements (e.g., 302-304; 401-404). When the casting process is used only to encapsulate such logo/branding or other marketing information without weight elements 104, the resultant construct can be considered a domed logo with the polymer serving as a window to the logo. Alternatively when the casting process is used to encapsulate both one or more weight components/elements and logo/branding or other marketing information, then the resultant construct can be considered a weighted domed logo, again with the polymer serving as a window to the log and/or weight components.

In choosing a suitable encapsulant material 301, factors such as flexibility, translucency, shrinkage, and bonding strength may be taken into consideration. Because the external focused weight system 104 is incorporated onto blade 103 to create a weighted blade combination, as shown in FIGs. 1 and 4, the overall flexibility of the weighted blade combination is influenced by the flexibility of the encapsulant material 301 forming the external focused weight system 104. If the encapsulant material 301 chosen is stiffer (i.e., less flexible) than the underlying blade 103, the weighted blade combination becomes stiffer than the underlying blade 103 by itself. On the other hand, if the encapsulant material 301 is less stiff (i.e., more flexible) compared to the underlying blade 103, the weighted blade combination may not feel noticeably different from the underlying blade 103 by itself. Translucent polyurethane has been found to be a suitable encapsulant material 301. The softness and flexibility of polyurethane works well because it adapts to and flexes with the underlying blade 103 without substantially changing the performance characteristics of underlying blade 103. The translucency of the material allows for the desired window into the component weight and/or logo/branding information.

Shrinkage generally refers to the deformation of a material that results in a reduced volume capacity. Certain materials, such as silicone, exhibit noticeable shrinkage after being heated to a high temperature and then allowed to cool down and hence may not reflect an accurate rendition of the mold 501. Polyurethane has been found to exhibit little or no shrinkage after curing at high temperature.

the bonding strength between the encapsulant material 301 and the resin material of the underlying blade 103 is important in view of the potentially harsh and forceful impacts that a hockey stick and blade 103 as well as other composite constructs may be subject to. It has been found that a polyurethane encapsulant material 301 is capable of forming a covalent bond or otherwise securely bonds to the resin and/or fibers of the underlying composite construct of the blade 103.

FIGs: 6a-6i are diagrams of illustrative steps for co-molding the external focused weight system 104 with the blade pre-form 602 to create the externally focused weighted composite blade 103, such as that illustrated in FIGs. 1 and 4. It should be understood that while this process is describes a co-molding implementation of an external focused weight system 104 to a blade 103, it may be used to co-mold an external focused weight system 104 into any composite construct including for example composite shafts of hockey or lacrosse sticks, composite footwear, skates or shells, or other composite structures, sporting instrument related or otherwise.

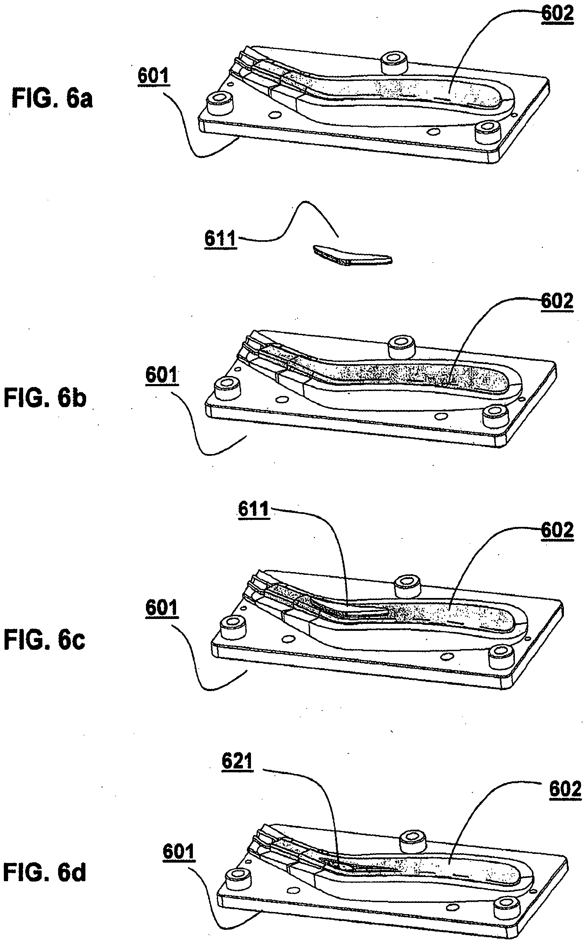

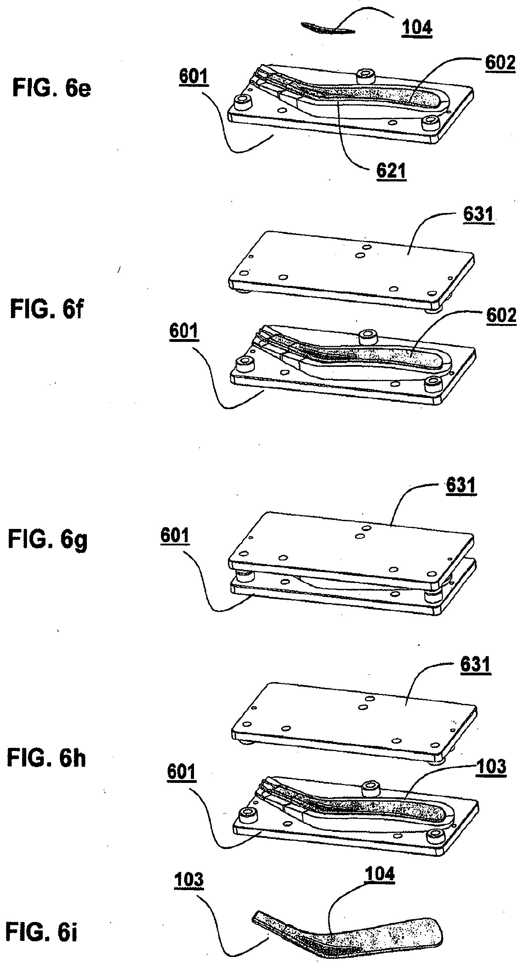

FIG. 6a illustrates an uncured blade pre-form 602 positioned within a first or bottom mold portion 601. Mold portion 601 is the portion of the mold that generally defines the front face of the blade. As previously noted, the blade pre-form 602 may be constructed by wrapping multiple plies of fibers over one or more core elements and expansion bladder and then applying an uncured resin to the plies of fibers via a resin transfer process. One or more of the plies of fibers may be pre-impregnated with resin, the tackiness/adhesiveness of the resin on the pre-impregnated plies (which can be thought of as a tape or tape like substrate) is capable of assisting in forming the lay-up (i.e., positioning the various plies in the desired position and orientation relative to one another as well as the core elements). The use of pre-impregnated plies reduces or avoids all together the need to apply additional resin to the plies. As illustrated in FIGs. 6b-6c, once the blade pre-form is properly positioned within the mold 601, a debossing jig 611 is pressed onto the backside of the blade pre-form 602 in the desired position to create a corresponding cavity 621 on the surface of the backside of the blade pre-form 602. As illustrated in FIG. 6d, the shape and the dimensions of the cavity 621 corresponds to that of the external focused weight system 104. Once the cavity 621 is formed, the Jig 611 is removed and the external focused weight system 104, as shown in FIG. 6e, is inserted within the cavity 621. It is contemplated that the cavity is dimensioned so that when the external focused weight system is inserted therein, the surface transition between the blade pre-form 602 and the external focused weight system 104 is flush or substantially flush. While the use of a jig 611 is described, it is also contemplated that the process may be practiced without a jig. For example, the external focused weight system 104 may be incorporated into the blade 103 in a co-molding process wherein the external focused weight system 104 is positioned at the desired location on the blade pre-form construct and then the molding process serves to embed the system 104 into the blade 103.

Like the indentations or holes 503 used in connection with the preformed cavity 502 of the mold 501 (shown in FIG. 5) described above with respect to casting or molding the external focused weight system 104, the cavity 621 formed on the surface of the blade pre-form 602 may include indentations or holes for receiving the protrusions 311 (see FIG. 3b) from the back of an external focused weight system 104. These indentations or holes for receiving the protrusions may be created by a relief pattern provided on the debossing surface (surface facing the blade pre-form 602) of the debossing jig 611. The edges surrounding the debossing jig 611 and the edges of the relief pattern on the imprinting surface may be beveled to prevent damaging the surface of the blade pre-form 602 when the debossing jig 611 is pressed or otherwise applied. While corresponding indentations or positioning indents or holes may be positioned or created in the blade pre-form as a result of debossing, it is also contemplated that the one or more of the molds 601 or 631 may include positioning features such as indentations, holes or other geometrical aspects or features that facilitate the desired positioning of the external focused weight system 104 relative to the blade pre-form construct and the mold elements. Hence, it is contemplated that positioning features (e.g., holes, indentations etc) may be included in a mold, in the pre-form construct, and/or as a result of debossing the pre-form construction.

Co-molding a component (e.g., the external focused weight system 104) externally to the composite structure (e.g., blade) whether by use of a Jig or otherwise alters the configuration of the underlying and adjacent composite fiber construct by compressing the core elements and re-configuring the shape of the pre-form construct. Such alterations are capable of modifying performance characteristics that would otherwise exist. It should be recognized that minimizing the thickness and or shape of a focused weight system 104 or other co-molded component can have a corresponding affect in minimizing or otherwise reducing the degree of alteration. For example, tapering the thickness of the edges of the focused weight system 104 or other co-molded component as they extend outward may reduce the in the change in configuration of the underlying composite structure to facilitate a more gradual transition. The use of a higher density material to form the weighted components is capable of reducing the dimensions of the system while maintaining the desired weight distribution. Forming the focused weight system 104 or other co-molded component in a manner that includes a relatively thin perimeter thickness may also minimize the degree of alteration and create a less abrupt change along the perimeter of the underlying cavity. It is contemplated in one implementation, for example that the external focused weight system 104 be comprised of discrete weighted components fabricated from high density metal(s) such as zinc and an overall and/or perimeter thickness of ~1-1.65 mm and an overall weight of ~ 9 gram +/- 1 gram.

FIGs. 6f-6g illustrates applying and securing a top mold portion 631 to the bottom mold portion 601 to enclose the uncured blade pre-form 602. Once enclosed, the blade pre-form 602 may be heated to a high temperature to accelerate the curing process of the blade pre-form 602. For example, curing the blade pre-form 602 with the external focused weight system 104 or other co-molded polymer (e.g., polyurethane) component at 300°F may take approximately ~30-40 minutes. The curing process hardens the resin of the blade pre-form 602 so that the fibers become disposed within a hardened resin matrix while the mold defines the exterior shape of the cured blade 103. Additionally, during the curing process, a strong bond is capable of developing between the resin of the underlying construct of the blade 103 and the encapsulant material 301 of the external focused weight system 104 or other co molded polymer component (e.g., non weighted domed logo). FIGs. 6h-6i illustrate the steps of separating the top and bottom mold portions, 631 and 601, respectively, after curing and removing the molded and cured focused weighted blade 103 from the mold. A clear coat may be applied over the weighted blade 103 to provide a glossy finish.

As a variation to the co-molding process illustrated in FIGs. 6a-6i, it is contemplated that the external focused weight system 104 may be cast directly in the cavity 621 of the uncured blade pre-form 602. In other words, the cavity 621 may serve as the "mold" for forming the external focused weight system 104. For instance, instead of placing a pre-casted external focused weight system 104 into the cavity 621 as shown in FIG. 6e, discrete weighted components 302-304 may be placed and oriented inside the cavity 621, followed by an encapsulant material 301 being applied to the cavity 621 (e.g., pouring clear PU material or other suitable polymer into the cavity 621). In the cases where the weight components/elements are in the form of metal flakes or other small high density particles, those particles may be mixed into the PU or suitable polymer before pouring the polymer into the cavity 621). After that, similar to the steps illustrated in FIGs. 6f-6g, the blade pre-form 602 may be enclosed by applying and securing a top mold portion 631 and cured at high temperature. In this manner, the resin from the blade pre-form 602 and the encapsulant material 301 are cured and co-molded simultaneously, a process which is capable of forming perhaps a stronger bond between the resin and the encapsulant material 301 and potentially also increasing manufacturing efficiency by among other things reducing production time.

As an alternative to the co-molding processes described above, it is contemplated that the external focused weight system or domed logo element may be bonded to a hockey stick blade via an adhesive, such as epoxy glue. First, a cavity may be created on the surface of the composite construct for example on the backside of the hockey stick blade. Multiple methods of creating the cavity are contemplated. For instance, the cavity may be created by employing an insert having the shape and dimensions of the intended external focused weight system and/or branding element. Together with the insert placed at the desired location on the surface of an uncured hockey blade pre-form, both the insert and the blade pre-form may be enclosed by a mold and then heated to accelerate the curing process of the blade pre-form. Once the blade pre-form has been cured, the insert may be removed from the corresponding cavity that has been formed on the surface of the hockey stick blade. Alternatively, the corresponding cavity may be formed without using an insert by employing a mold enclosure that already includes a built-in debossing element having the shape and dimensions of the intended external focused weight system. Once the cavity has been formed, for example on the backside surface of the hockey stick blade, adhesive may be administered to one or more inner surfaces of the cavity, followed by inserting the external focused weight system and/or domed logo element into the cavity. Pressure may be applied against the external focused weight system and/or the composite construct, e.g., hockey stick blade, to ensure that a secure bond is formed by the adhesive.

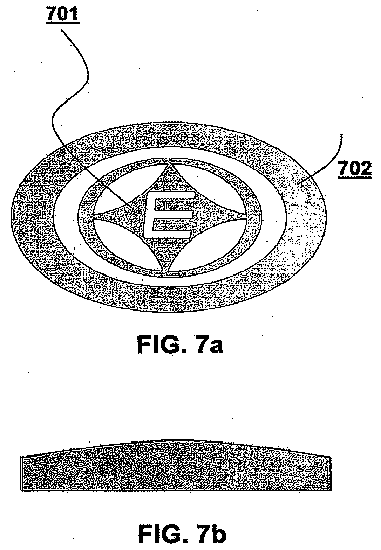

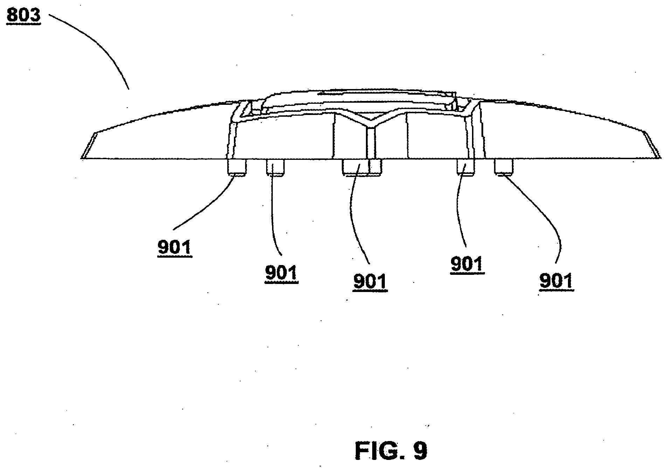

As previously noted, although the exemplary casting process illustrated in FIGs. 5a-5d and the exemplary co-molding process illustrated in FIGs. 6a-6i are described in the context of incorporating an external focused weight system 104 onto a composite hockey blade 103 or other composite construct, it is contemplated that these processes may be employed in other contexts. For instance, one or more non-weighted design component may be casted and incorporated onto a composite hockey stick shaft 102. Instead of or in addition to the weighted components 302-304 being placing inside the preformed cavity 502 of the mold 501, as shown in FIGs. 5a and 5b, one or more non-weighted design components, such as the logo components 701 and 702 shown in FIG. 7, may be placed therein in the desired position. Generally, a design/branding component having an average aggregate density that is substantially the same or less than the density of the encapsulant material 301 may be considered non-weighted. Alternatively, a design/branding component having an average aggregate density that is less than the overall average density of the underlying composite structure may also be considered a non-weighted component. In addition, design/branding components with an aggregate weight that is less than 20 percent of the weight of the encapsulant material, and more preferably 15 percent and even more preferably 10 percent may be considered non-weighted. The exemplary co-molding process illustrated in FIGs. 6a-6i may then be employed to incorporate the casted design component into a composite structure such as a hockey stick blade 103 or shaft 102. It is contemplated that the processes illustrated in FIGs. 5a-5d and FIGs. 6a-6i may be used to incorporate both weighted and non-weighted components onto any composite construct, including but not limited to sporting instruments such as hockey or lacrosse sticks, footwear such as hockey or sking boots and skates, blade or roller blade holders, helmets, baseball bats, tennis racquets, biking or cycling components, and surfboards and any other composite structure for which branding/marketing and/or focused weight distribution may be found beneficial. Moreover, the non-weighted components may be cast directly in the cavity 621 of the uncured composite construct or structure as in the variation of the co-molding process previously described above. In such a construction process, the non-weighted design components (e.g., logo, branding or other product related information) may be positioned within the cavity in the desired location and the polymer encapsulant poured thereon top and then co-molded and cured with the underlying composite construct. It is also contemplated, however, that the non-weighted design component(s) be positioned within the cavity and/or in the desired location on the uncured composite construct so as to lie adjacent to one or more solid or semi-solid polymer encapsulant elements as opposed to using an liquefied polymer encapsulant. In this type of construction process, the co-molding process would not only result in the encapsulant being bonded to the underlying composite construct but also would result in the encapsulant element being bonded together and/or with the non-weighted design element or component such as that illustrated in FIGs. 7 or 9. Moreover, the use of solid encapsulant materials that are directly co-molded with the non-weighted or weighted components, may allow for the use of different encapsulant materials even within a single externally co-molded component. For example, a semi-translucent or opaque solid or semi-solid encapsulant may be placed in the cavity 621 and then the weighted and/or non-weighted components may be positioned thereon top. Then a translucent/clear solid or liquid polymer, for example, may be placed (if solid) or poured (if in liquid form) on top and the entire construct co-molded and cured. In such a construction, the externally co-molded component would be formed of multiple formulations of encapsulants, which may be desirable from a marketing or engineering stand point. It is also contemplated that a weighted tape (perhaps with a log or branding thereon) may be used as the weighted component and that either directly inserted into the cavity 621 and co-molded with an encapsulated polymer and composite construct or pre-casted with the polymer as described in connection with FIGs. 5a-5d before being co-molded with the composite construct.

Yet another aspect of the technology disclosed herein relates to the addition of a weight-adjustable end-plug system 105 to a shaft such as the shaft 102 the shown in FIG. 1. The use of focused weighting systems on sporting or other instrument that during use is swung can facilitate the adjustment of the swing weight of the instrument, e.g. hockey stick 101. The swing weight of a sporting good instrument, such as a hockey stick 101, may be characterized as the weight of the instrument/hockey stick as measured from a specified pivot point relative to the end of the shaft often referred to as a fulcrum. The pivot point for a hockey stick is the point at which the stick rotates, for instance, when the hockey player makes a slap shot, the pivot point is generally located in the lower-half region of the shaft 102. The swing weight of the hockey stick is proportional to the distance between the center of gravity of the hockey stick and pivot point. The farther away the center of gravity is from the pivot point, the greater the swing weight. Because each hockey player generally has his personal style of holding and swinging the hockey stick, the pivot point may vary from one hockey player to another. Consequently, the swing weight of the stick may also vary from one hockey player to another. The weight-adjustable end-plug system 105 enables a hockey player to shift the center of gravity, and thus the swing weight vis-à-vis a particular pivot point, of the hockey stick by adding or removing weights from the shaft end of the hockey stick. It is contemplated that the weight-adjustable end-plug system 105 may be used on a hockey stick along with a blade 103 having an external focused weight system 104 as previously described. The combination of both an external focused weight system 104 on the blade and a weight-adjustable end-plug system 105 to a shaft is capable of facilitating the adjustment of the swing weight to a higher degree than otherwise in that both ends of the hockey stick would have focused weight elements and hence a small adjustment on one end would have a greater impact with respect to adjusting the swing weight relative to a given pivot point.

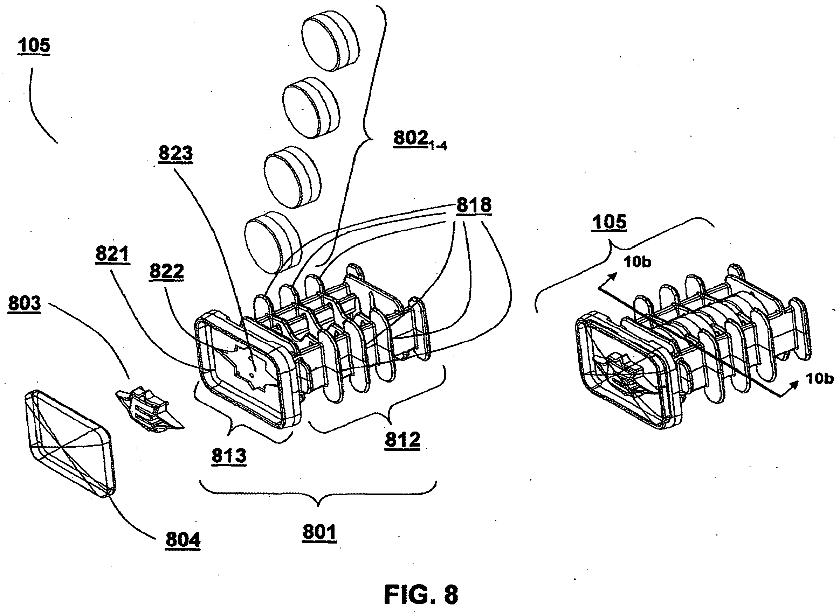

FIG. 8 illustrates both a disassembled/exploded view and an assembled view of an exemplary embodiment of a weight-adjustable end-plug system 105. As shown, the weight-adjustable end-plug system 105 comprises an end-plug unit 801, a set of one or more weights 802₁₋₄, a logo, branding or design component 803, and an encapsulant material 804. The end-plug unit 801, which may be formed via an injection molding process, includes a weight-holding part 812 and an end-cap part 813 that is positioned longitudinally at one end of the weight-holding part 812. Weight-holding part 812 includes one or more compartments or cartridges open ended similar to a slot for inserting weights 802₁₋₄, each compartment is designed to securely hold one or more weights. The weight-adjustable end-plug system 105 is designed such that the weights 802₁₋₄ are user-removable, such that the user may add and/or remove weights from the compartments of the weight-holding part 812 to alter the overall weight of the end-plug system 105 and the configuration of the weights therein. A "user-removable" component means that a component may be removed from a unit without permanently damaging the unit or the component and that the component was designed to be removed by an ordinary, intended user. If special skills (e.g., unwelding, melting, etc.) are required to remove a component, the component is not "user-removable." Although weights 802₁₋₄ may be formed of any high density material and in any shape, in one preferred embodiment, the weights 802₁₋₄ are stainless steel and are formed in a cylindrical shape as illustrated in FIG. 8. Additionally, the edges on the weights may be beveled to make insertion of the weights into the compartments of the weight-holding unit 812 easier. A high density material refers to any material having a density considerably greater than the density of the shaft 102 or than the density of the end-plug unit 801. In one embodiment, the density of the high density material is at least five or more times greater than the density of the shaft 102 or than the density of the end-plug unit 801. In one embodiment, the density of the high density material is at least ten or more times greater than the density of the shaft 102 or than the density of the end-plug unit 801. The weights may be the same or different in mass. The weights may have the same and/or different densities.

As FIG. 8 further illustrates, the end-cap part 813 may have a cavity 821 for holding the logo component 803. Within the cavity 821, there may be an indentation 822 in the shape of the logo component 803 and one or more holes 823 for receiving the protrusions 901 (see FIG. 9) from the back of the logo component 803, according to one embodiment. Similar to the casting process illustrated by FIGs. 5a-5d, after placing and aligning the logo component unit in the cavity 821 of the end-cap unit 813, an encapsulant material 804, such as clear PU in liquid form, may be applied to encapsulate the logo component 803 and then cured at high temperature. Alternatively, the encapsulant material 804 may be a pre-cured clear PU component that is secured over the logo component 804 inside cavity 821 using an adhesive.

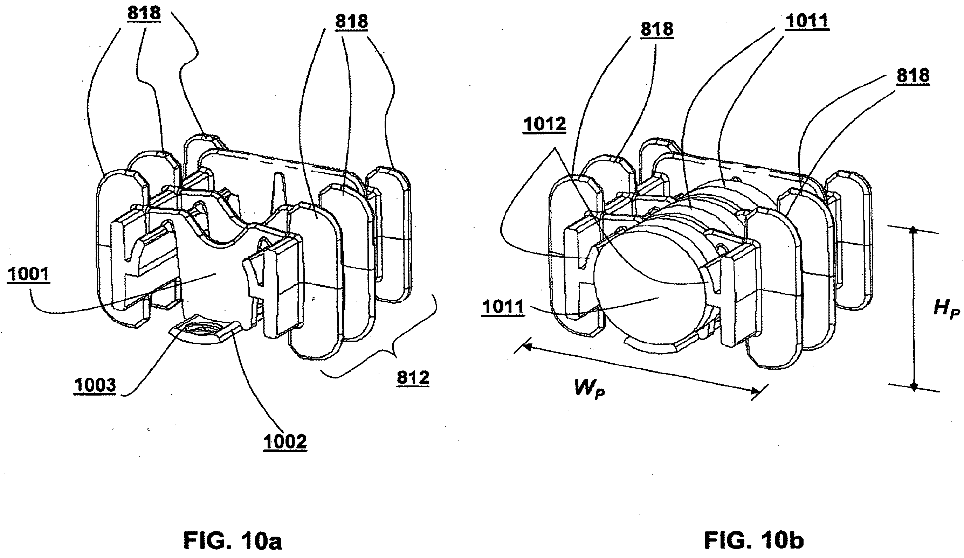

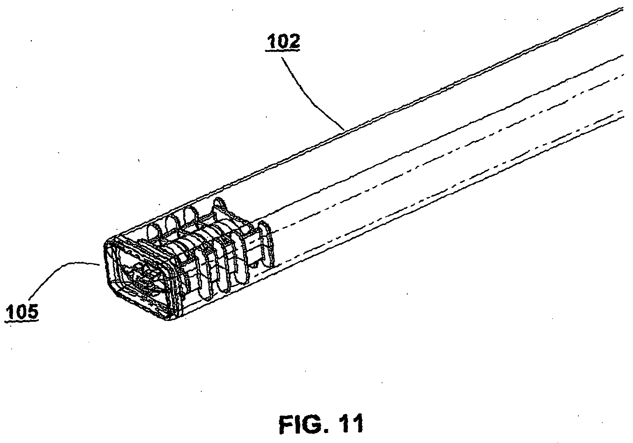

FIGs. 10a and 10b illustrate cross-sectional views of the weight-holding part 812 of the end-plug unit 801. As FIG. 10a illustrates, the weight-holding part 812 features fins 818 that are arranged longitudinally along two opposing surfaces of the weight-holding part 812 and that extend laterally from these opposing surfaces. These fins 818 help to secure the weight-adjustable end-plug system 105 when it is inserted into the shaft 102 of the hockey stick (see FIG. 11). While the illustrated implementation shows fins 818 on two opposing surfaces, it should be understood that fins 818 may be included on any or none of the surfaces such that they may be included on one; two, three or all four or more surfaces. The fins 818 extending from opposing surfaces span a width *W_{P}* and a height *H_{P},* as depicted in FIG. 10a. *W_{P}* and *H_{P}* correspond approximately to but are slightly greater than the dimensions *W_{S}* and *H_{S},* respectively, of the inner cavity of the shaft 102 depicted in FIG. 2. For instance, *W_{P}* and *H_{P}* may be 1% to 5% greater than *W_{S}* and *H_{S},* respectively. In this manner, when the weight-holding part 812 is inserted into the shaft 102, as shown in FIG. 11, the fins 818 are capable of flexing and exert outward forces against the inner side walls of the shaft 102, thereby giving rise to static frictional forces that secure the end-plug system 105 to the shaft 103. The more the fins flex (i.e., bigger *W_{P}* and *H_{P}*), the potentially greater the frictional forces generated. It is also contemplated that increasing the number of fins also increases the frictional forces generated, thereby further securing the end-plug system 105 to the shaft 102. The fins also serve to dampen the transfer of forces between the weights secured in the weight-holding part 812 and the shaft 102. While the end-plug system 105 to the shaft 103 is rectangular in shape to correspond to the cross section of a tubular rectangular hockey stick shaft, it should be understood that it may take any shape corresponding to the internal tubular dimensions of the instrument into which it is to be inserted. For example, it may be octagonal to fit within an octagonal lacrosse stick or circular or oval to fit within a tubular opening of baseball or softball bat.

FIG. 10a further illustrates that each weight compartment is separated from another by a wall 1001, which helps to dampen force transfers between adjacent weights. A spine 1002 that runs longitudinally underneath the weight compartments helps to support and secure the weights in their respective compartments/cartridges. As shown, there may be a hole underneath each weight compartment in the spine 1002 that allows the user to eject a secured weight, such as by inserting a rigid instrument through the hole 1003 to push onto and displace the weight through the opening opposite the spine 1002. FIG. 10b illustrates cylindrical weighted components 1011 secured within their respective compartments, the cylindrical weighted component 1011 has a diameter *D*. The cylindrical weighted component 1011 is inserted into its compartment through the opening having a width *W_{O}*. According to one preferred embodiment, the width of the opening *W_{O}* is smaller than the diameter *D* of the cylindrical weighted component 1011. In this embodiment, the curved side walls 1012 of the opening flex outward, expanding the opening, to accommodate the cylindrical weighted component 1011 as it is being inserted through the opening of the compartment. The curved side walls 1012 snap back and return to their original positions to help secure the cylindrical weighted component 1011 once the widest portion of the weight 1011 has bypassed the opening. Thus, the weight-holding part 812 includes a mechanism for securing an inserted weighted component.

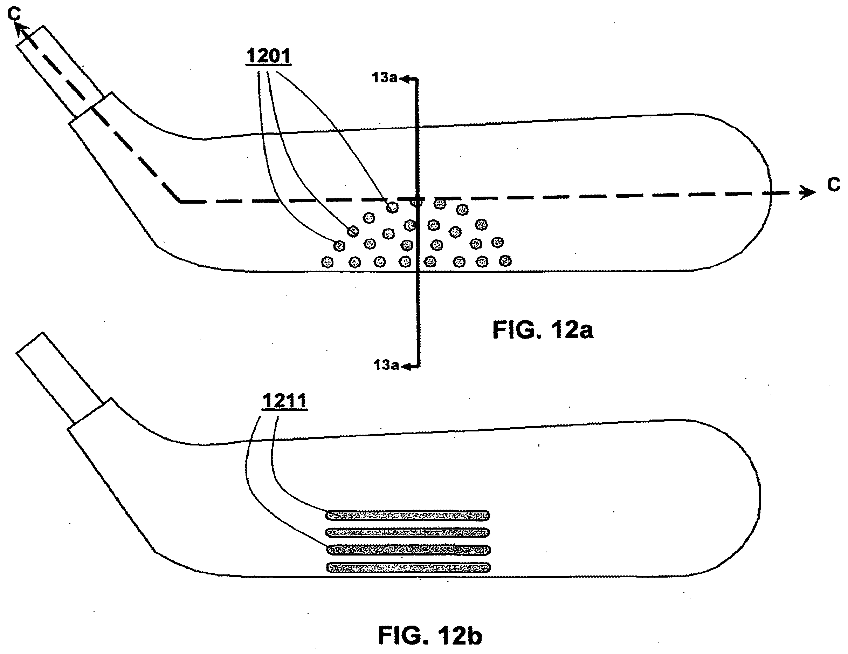

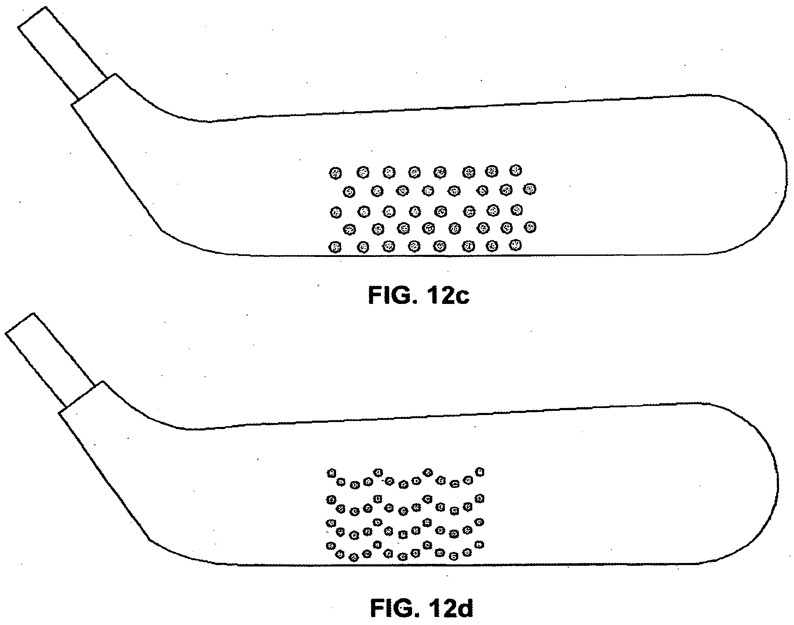

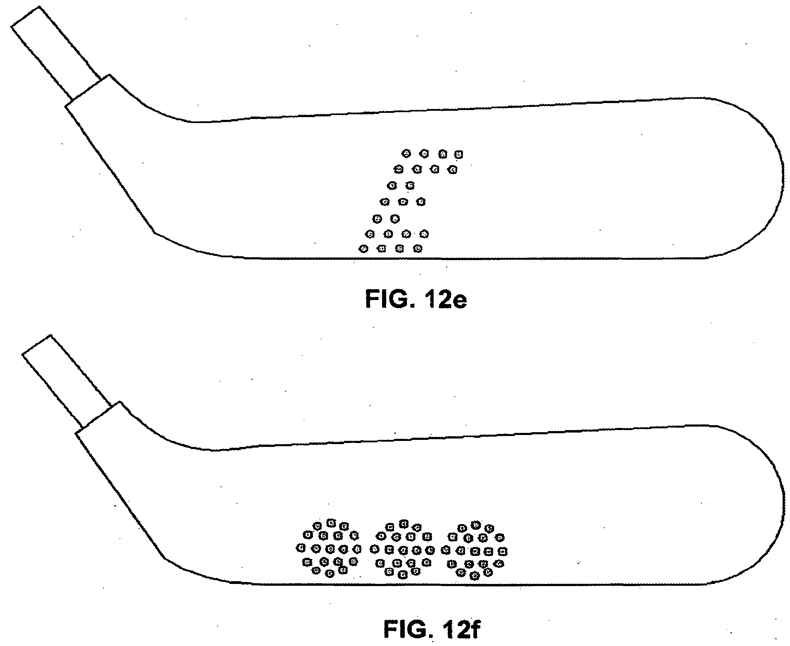

Yet another aspect of the inventive technology disclosed herein relates to inclusion of dimple arrays on the surface of the blade or composite construct. This aspect can be combined with the other inventive technologies disclosed herein. For example it is contemplated that a focused external weight component and a non weighted branding component may be together or individually combined with one or more dimple arrays. FIG. 12a illustrates an exemplary array arrangement of concave and/or convex dimpled features 1201 on a hockey blade surface to form a textured hockey stick blade surface. Incorporating concave and/or convex features on a composite structure such as the hockey stick blade surface is capable of facilitating the launch of a hockey puck in a potentially more stable and controlled manner. Inclusion of dimpled features on the hockey stick blade surface, as shown in FIG. 12a, is capable of creating higher rotational puck speed, via the "gear effect" that occurs at the contact surfaces between the blade and the puck. Greater rotational puck speed at launch is capable of increasing puck stability and hence accuracy. In general terms, the phrase "gear effect" generally refers to the interaction in which one gear is used to turn another gear. For instance, one gear that is turning counterclockwise will turn another gear clockwise and vice versa. A similar effect occurs when a puck is struck by a hockey stick blade surface having concave and/or convex features. Thus, while a puck may still rotate via gear effect from friction generated by a blade surface that does not have concave or convex features, the presence of these features on a blade surface is capable of greatly enhancing the rotational speed of a puck launched from its surface by enhancing the gear effect. FIGs. 12b-12-f illustrates other exemplary arrangements of concave and/or convex features on a hockey stick blade surface that are contemplated. As shown in FIG. 12b, the concave and/or convex features 1211 may be trenches or raised channels. It should be understood that there are numerous other contemplated implementations.

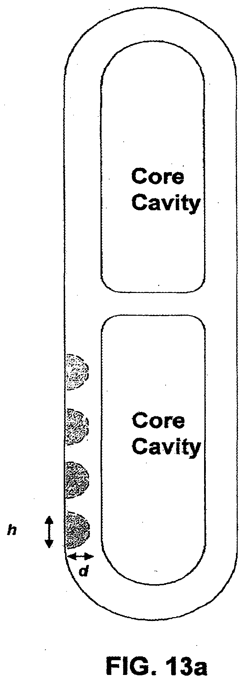

FIG. 13a provides a cross-sectional view (taken at line 13a-----13a) of the hockey stick blade in FIG. 12a, including concave dimpled features 1201 that are filled in using a filler material 1322, such as a polyurethane (PU) material. PU has been found to be a suitable material because it tends to be softer and less stiff relative to both a conventional puck and the hardened epoxy resin surface of a composite hockey stick blade. Hence, when a puck impacts the PU-filled concave features of the hockey stick blade surface, the puck is able to "dig" into the PU filler material, which may serve to enhance the gripping mechanism of the hockey stick blade. As discussed earlier, PU also tends to form a durable and strong bond with the epoxy resin material of a composite hockey stick blade surface. In general, a desirable filler material should not significantly affect the overall stiffness of the hockey stick blade. While PU has been found suitable, it is contemplated that other polymer materials may be used including, for example, Surlyn.

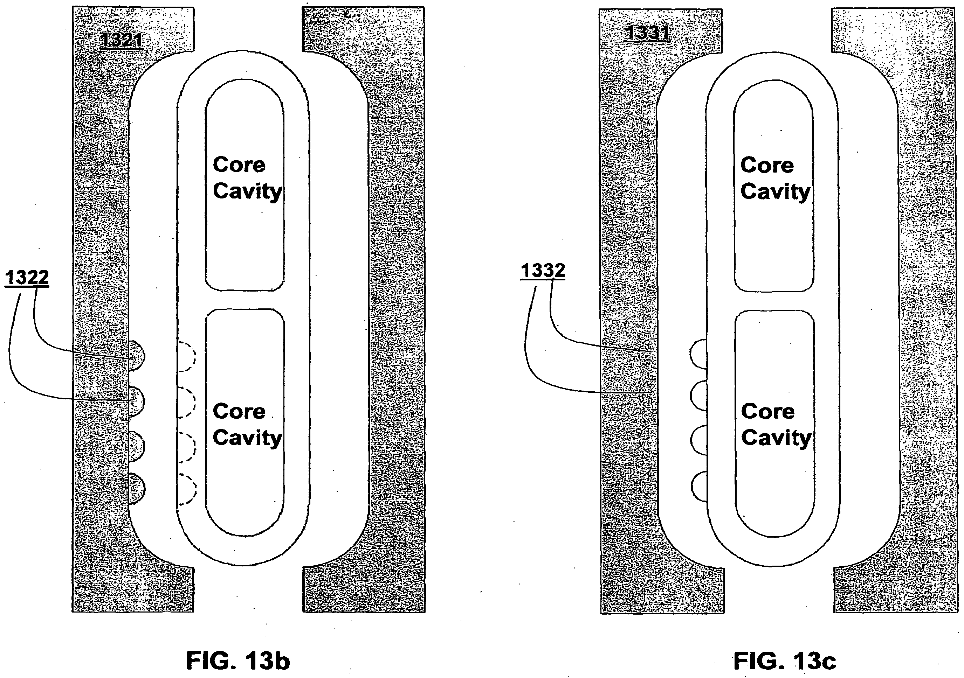

While each of the dimpled features in FIG. 13a is depicted as having the same size and dimension, it is contemplated that each individual concave and/or concave feature may have a different size and/or dimension. According to one implementation, the heights *h* of the convex dimpled features or the depth *d* of the concave dimpled features may range from 0.5 mm to 2.5 mm. It is further contemplated that a combination or sub-combination of unfilled concave features, filled-in concave features (e.g., PU filled), and/or convex features may be incorporated in one or more arrangements on a hockey stick blade surface, for instance, to optimize or to achieve a desirable gear effect. As shown in FIG. 13b, concave features may be created on a hockey stick blade surface by including corresponding debossing elements 1322 in a mold 1321 that is used during the curing of the hockey stick blade pre-form. FIG. 13c illustrates that convex features may be similarly created on a hockey stick blade surface by including corresponding embossing elements 1332 in a mold 1331. Furthermore, a plastic compression bladder may be placed inside the core cavity of the blade pre-form to provide sufficient outward pressure for forming the concave and/or convex features on the hockey stick blade surface.

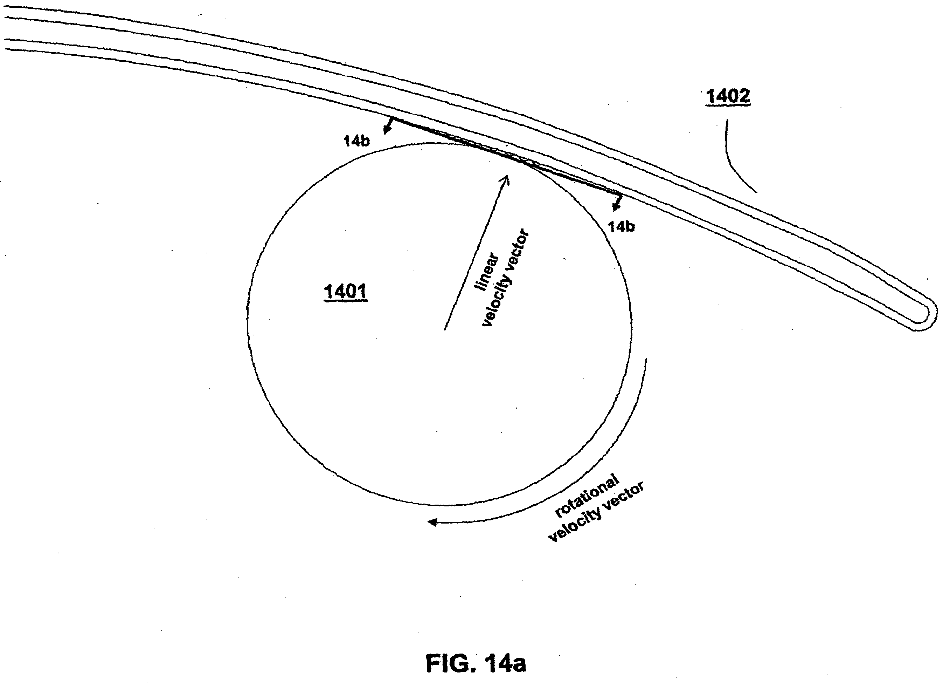

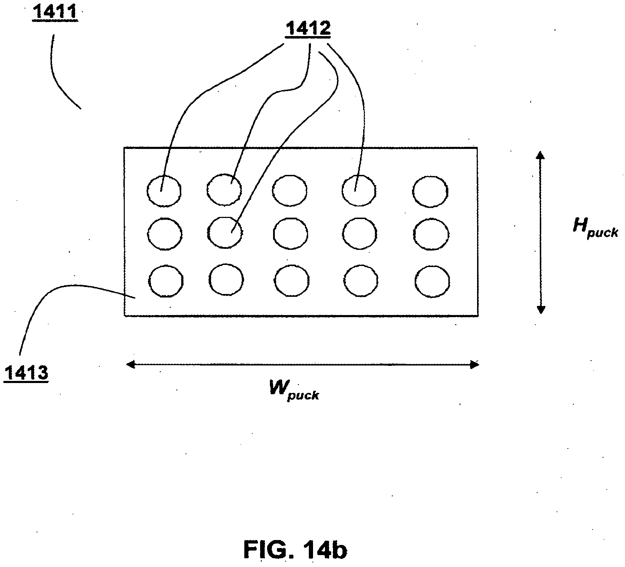

There are several factors to consider when determining the optimal sizes and spatial arrangement of the concave and/or convex features on a hockey stick blade surface. In one respect, sizes and spatial arrangement may be deemed "optimal" if they help to provide the intended gear effect. These considerations may be described using FIGs. 14a and 14b. FIG. 14a illustrates the moment of impact between a hockey puck 1401 and a hockey blade 1402 having exemplary convex dimpled features on its front surface. The linear and rotational velocities of the puck may be illustrated by corresponding velocity vectors. FIG. 14b illustrates an exemplary view of the contact surface area 1411 of when the hockey puck 1401 strikes the hockey stick blade 1402 having convex features 1412, according to one embodiment. The width *W_{puck}* of the contact surface area 1401 is determined by the relative velocities of the puck and hockey stick blade immediately before impact. During impact, the initial impact region of the puck may deform and widen against the hockey stick blade to form the contact surface area 1411. The greater the impact (i.e., greater relative velocities), the greater the potential deformity and the wider the contact surface area 1411 becomes. The sizes and spatial arrangement of the concave and/or convex features should be designed relative to the dimensions of the contact surface area. For instance, if the features are too big, the puck may only make contact with the features 1412 and not with the underlying hockey stick blade surface 1413. If the features are too sparsely spaced, the puck may only make contact with the underlying blade surface 1413 and not with the features 1412. If the features 1412 are too small, the features 1412 may enhance the friction mechanism between the puck and the blade surface rather than the gear effect. Thus it is contemplated that the arrangement of the array may vary in numerous respects. For example, the dimples may be symmetrically arranged or non-symmetrically arranged. The dimple array may be located longitudinally at the center of the blade, at the heel or tip of the blade or any combination thereof. The dimple array may located vertically above the centerline of the blade face, below the center line of the blade face or overlap the centerline of the blade face or any combination thereof. The dimple array may be arranged in a circular fashion, a semi-circular fashion, a rectangular or trapezoidal fashion, and/or any other geometry or combinations of geometries. The dimple arrays on the front face of the blade may be the same or different than those on the back face of the blade. Moreover, the back face of the blade may have fewer or no dimple arrays relative to the front face of the blade or vice versa.

While there has been illustrated and described what are presently considered to be preferred embodiments and features of the present invention, it will be understood by those skilled in the art that various changes and modifications may be made, and equivalents may be substituted for elements thereof, without departing from the scope of the invention. In addition, many modifications may be made to adapt particular element, feature or implementation to the teachings and of the present invention without departing from the central scope of the invention. Therefore, it is intended that this invention not be limited to the particular embodiments disclosed herein, but that the invention include all embodiments falling within the scope of the appended claims. Thus, it should be understood that various aspects of the teachings and principles disclosed herein relate to configuration of the blades and hockey sticks and components elements thereof. Other aspects relate to internal construction of the component elements and the materials employed in their construction and the methods of their manufacture and assembly. Yet other aspects relate to the combination of the foregoing aspects. The combination of one, more than one, or the totality of these aspects defines the scope of the invention disclosed herein. No other limitations are placed on the scope of the invention set forth in this disclosure. Accordingly, what is disclosed as inventive herein is only limited by the scope of this disclosure that supports or otherwise provides a basis (expressly, impliedly or inherently) for patentability over the prior art.

## Claims

1. A hockey stick blade system comprising:
a. a composite hockey stick blade (103); and
b. a focused weight system (104) **characterized in that** said weight system is co-molded to an external surface of the cured composite hockey stick blade (103), wherein the focused weight system (104) includes an encapsulant material (301) and one or more weighted components (302, 303, 304) at least partially encapsulated in the encapsulant material (301).

2. The hockey stick blade system of claim 1, wherein the encapsulant material (301) is a polyurethane elastomer.

3. The hockey stick blade system of claim 1, wherein the focused weight system (104) is located in the heel region (411) of the composite hockey stick blade (103).

4. The hockey stick blade system of claim 1, wherein the focused weight system (104) is bonded covalently to the composite hockey stick blade (103).

5. The hockey stick blade system of claim 2, wherein the one or more weighted components (302, 303, 304) have densities substantially greater than the density of the composite hockey stick blade (103).

6. The hockey stick blade system of claim 5, wherein substantially greater is at least five times greater.

7. The hockey stick blade system of claim 5, wherein substantially greater is at least ten times greater.

8. The hockey stick blade system of claim 1 wherein the focused weight system (104) comprises a logo system (701, 702).

## Patentansprüche

1. Hockeyschlägerblattsystem, aufweisend:
a. ein Verbund-Hockeyschlägerblatt (103); und
b. ein Konzentriertes-Gewicht-System (104), **dadurch gekennzeichnet, dass**
das Gewicht-System mit einer Außenfläche des gehärteten Verbund-Hockeyschlägerblattes (103) zusammengeformt ist, wobei das Konzentriertes-Gewicht-System (104) ein Verkapselungsmaterial (301) und eine oder mehrere Gewichtskomponenten (302, 303, 304) aufweist, die wenigstens teilweise in dem Verkapselungsmaterial (301) eingekapselt sind.

2. Hockeyschlägerblattsystem nach Anspruch 1, wobei das Verkapselungsmaterial (301) ein Polyurethanelastomer ist.

3. Hockeyschlägerblattsystem nach Anspruch 1, wobei das Konzentriertes-Gewicht-System (104) in dem Fersenbereich (411) des Verbund-Hockeyschlägerblattes (103) angeordnet ist.

4. Hockeyschlägerblattsystem nach Anspruch 1, wobei das Konzentriertes-Gewicht-System (104) mit dem Verbund-Hockeyschlägerblatt (103) kovalent verbunden ist.

5. Hockeyschlägerblattsystem nach Anspruch 2, wobei die eine oder mehreren Gewichtskomponenten (302, 303, 304) Dichten haben, die wesentlich größer als die Dichte des Verbund-Hockeyschlägerblattes (103) sind.

6. Hockeyschlägerblattsystem nach Anspruch 5, wobei wesentlich größer wenigstens fünfmal größer ist.

7. Hockeyschlägerblattsystem nach Anspruch 5, wobei wesentlich größer wenigstens zehnmal größer ist.

8. Hockeyschlägerblattsystem nach Anspruch 1, wobei das konzentrierte Gewichtssystem (104) ein Logosystem (701, 702) aufweist.

## Revendications

1. Palette de crosse de hockey qui comprend :
a. une palette de crosse de hockey composite (103) ; et
b. un système de poids concentré (104), **caractérisée en ce que** ledit système de poids est co-moulé avec une surface externe de la palette de crosse de hockey composite durcie (103), le système de poids concentré (104) comprenant un matériau encapsulant (301) et un ou plusieurs composants pesés (302, 303, 304) au moins partiellement encapsulés dans le matériau encapsulant (301).

2. Palette de crosse de hockey selon la revendication 1, dans laquelle le matériau encapsulant (301) est un élastomère de polyuréthane.

3. Palette de crosse de hockey selon la revendication 1, dans laquelle le système de poids concentré (104) se trouve dans la zone de talon (411) de la palette de crosse de hockey composite (103).

4. Palette de crosse de hockey selon la revendication 1, dans laquelle le système de poids concentré (104) est relié de manière covalente à la palette de crosse de hockey composite (103).

5. Palette de crosse de hockey selon la revendication 2, dans laquelle le ou les composant(s) pesé(s) (302, 303, 304) présente(nt) des densités sensiblement supérieures à celle de la palette de crosse de hockey composite (103).

6. Palette de crosse de hockey selon la revendication 5, dans laquelle l'expression « sensiblement supérieures » signifie « au moins cinq fois supérieures ».

7. Palette de crosse de hockey selon la revendication 5, dans laquelle l'expression « sensiblement supérieures » signifie « au moins dix fois supérieures ».

8. Palette de crosse de hockey selon la revendication 1, dans laquelle le système de poids concentré (104) comprend un système de logo (701, 702).
